# EUROPEAN PATENT SPECIFICATION

(11) **EP 3 060 529 B1**
(45) Date of publication and mention of the grant of the patent: **06.12.2017**
(21) Application number: 14809087.1
(22) Date of filing: 22.10.2014
(51) Int. Cl.: C04B 7/47

(54) **METHOD AND DEVICE FOR RECOVERING ENERGY FROM DAMP EXHAUST GASES**
VERFAHREN UND VORRICHTUNG ZUR ENERGIEGEWINNUNG AUS FEUCHTEN ABGASEN
PROCÉDÉ ET DISPOSITIF PERMETTANT DE RÉCUPÉRER DE L'ÉNERGIE PROVENANT DE GAZ D'ÉCHAPPEMENT HUMIDES

(30) Priority: 22.10.2013 AT 8162013
(43) Date of publication of application: 31.08.2016
(73) Proprietor: Holcim Technology Ltd., 8645 Rapperswil-Jona (CH); ARMINES, 75272 Paris Cedex 06 (FR)
(72) Inventor: BOULAWZ KSAYER, Elias, CH-5113 Holderbank (CH); CLODIC, Denis, F-91120 Palaiseau (FR); HERZOG, Urs, Andreas, CH-5200 Brugg (CH); LAMARE, Thomas, Mansfield, TX 76063 (US); MAALOUF, Samer, F-92160 Antony (FR); WEIMER, Thomas, 71065 Sindelfingen (DE)
(74) Representative: Keschmann, Marc
(86) International application number: PCT/IB2014/002186
(87) International publication number: WO 2015/059547

(56) References cited:
- "Free Waste Heat Recovery Consulting Service", , 30 June 2013 (2013-06-30), XP055171715, Retrieved from the Internet: URL:http://www.heatcatcher.com/wp-content/ uploads/2013/06/Press-Pack-2013.pdf [retrieved on 2015-02-24]
- Darren Bryant: "Good Return on Investments Using ORC's to Generate Power & Save Cooling Costs", Cempower 2013, 5 June 2013 (2013-06-05), XP055171706, Retrieved from the Internet: URL:http://www.heatcatcher.com/wp-content/ uploads/2013/06/Heatcatcher-CEMPOWER-2013- Presentation.pdf [retrieved on 2015-02-24]
- "Waste Heat Recovery in a lime Plant", ZKG ZKG, no. 6 30 June 2013 (2013-06-30), XP002736381, Retrieved from the Internet: URL:http://www.zkg.de/en/artikel/zkg_Waste _heat_recovery_in_a_lime_plant_1741589.htm l [retrieved on 2015-02-24]

## Description

The invention relates to a method for recovering energy from damp exhaust gases having a temperature from 90-130 °C and a dew point from 50-75 °C.

The invention further relates to a device for carrying out said method.

In industrial processes, streams of exhaust gases are generated at various temperature levels. A number of different heat recovery methods have already been suggested for using the heat energy contained in the exhaust gas streams. Particularly when exhaust gas streams at temperatures above 300 °C are involved, the recovery of heat from such streams is associated with significant financial benefits, wherein use is typically made of conventional heat exchangers in which heat can be transferred from the hot exhaust gas stream to another medium.

In order to use the latent heat in an exhaust gas stream, methods have also been suggested for condensing exhaust gas, particularly in firing plants in which damp fuels are burned, so that the exhaust gas stream has a correspondingly high steam content.

In a cement manufacturing plant, exhaust gas streams are generated from which it seems economically reasonable to recover heat. For example, it is generally standard practice to make the used air from the clinker cooler available as tertiary air to a secondary firing system of the cement manufacturing plant. In the past, however, less attention has been paid to the use of relatively damp, low temperature exhaust gas streams in a cement clinker production plant for energy recovery purposes. Such gas streams are for example the stream of exhaust gas exiting the raw meal preheater, which after flowing through the raw meal mill at a temperature between 90 and 150 °C has a dew point from 50 to 80 °C at ambient pressure due to the moisture content of the raw meal. The exhaust gas from a slag drying unit may also be cited in this context, typically having a temperature from 90 to 120 °C and a dew point from 50 to 80 °C at ambient pressure. Damp, low-temperature exhaust gases of such kind contain not only a usable quantity of sensible heat, but also a not inconsiderable amount of latent heat, which can be recovered. Due to the low temperature level of the exhaust gas stream, the economic viability of recovering energy depends to a decisive degree on the efficiency of the recovery method.

The technologyof Heatcatcher (www.heatcatcher.com) discloses a method for recovering energy from exhaust gases, in which exhaust gas coming from the kiln or the clinker cooler is diverted via a bypass ductwork to a heat exchanger. The water, which is used in the heat exchanger as coolant and which was heated by the process to 130°C is fed to an Organic Rankine Cycle generator to in turn heat a liquid refrigerant, whereby the refrigerant is evaporated. The vaporized refrigerant is then supplied to a microturbine for energy generation and again liquefied in a condenser, after which the cycle can start again.

The invention is particularly concerned with the recovery of energy from damp exhaust gases having a temperature lower than 130 °C. For the purpose of the invention, the term exhaust gases is understood to mean not only exhaust gases from combustion processes, but aerosols in general, that is to say mixtures of solid or liquid particles in suspension in a gas. An exhaust gas is therefore also understood to refer to exhaust air that does not originate from a combustion process, for example.

The object of the present invention is therefore to use damp exhaust gases or damp exhaust air having a temperature from 90 to 130 °C and a water dew point from 50 to 75 °C (measured under ambient pressure) in order to recover the sensible and the latent heat content thereof. In this context, it should be possible in particular to use exhaust gas and exhaust air streams from cement clinker manufacturing plants as efficiently as possible. In particular, by this means it should be possible to use them to generate electricity.

In order to solve this object, in a method of the kind described in the introduction the invention provides that exhaust gas having a temperature from 90 to 130 °C and a water dew point from 50-75 °C is first cooled to a temperature above the dew point in an indirect, first heat exchanger, and the cooled exhaust gas is then passed through a direct contact condenser, wherein the condensate that forms in the direct contact condenser is collected and heated in the first heat exchanger by the exchange of heat with the exhaust gas. The invention thus provides a two-stage heat recovery process, in which in a first step only the sensible heat of the exhaust gas stream is used in an indirect heat exchanger, and the latent heat content is recovered in a direct contact condenser afterwards. In this process, the indirect heat exchanger and the direct contact condenser are connected in series, so that the damp exhaust gas first passes through the indirect heat exchanger and then through the direct contact condenser. Since the damp exhaust gas is cooled to a temperature that is above the dew point in the indirect heat exchanger, condensation and the corrosion problems associated therewith are avoided. The damp exhaust gas is not cooled to a temperature below the dew point until it reaches the direct contact condenser, so that the water content contained in the exhaust gas condenses there, and the corresponding condensation heat may be used subsequently.

In this context, the term direct contact condenser is understood to be a condensation unit in which a coolant comes into direct contact with the exhaust gas. The coolant is typically sprayed into a chamber through which the exhaust gas passes, so that an exceedingly large surface is available for heat transfer. The coolant is usually sprayed from the upper end of the chamber, and the exhaust gas is introduced into the chamber at the opposite, lower end and normally flows through the chamber from the bottom upwards. The condensate that forms in the direct contact condenser is collected on the floor of the chamber and drained off.

The coolant used is preferably water at a temperature below the water dew point of the exhaust gas. As a consequence of the condensation heat, the condensate that collects in the condenser is at a higher temperature than the initial state thereof that exists while spraying is carried out.

According to the invention, the condensate that is formed in the direct contact condenser is used as the coolant for the first heat exchanger, in which it is heated further as the exhaust gas is cooled.

The heat exchanger has the form of an indirect heat exchanger so that any direct contact between the coolant and the exhaust gas is avoided. Both streams are thus separated physically by at least one heat-permeable wall. In this case, the exhaust gas and the coolant preferably flow through the indirect heat exchanger in countercurrent flow. The indirect heat exchanger can preferably be designed as a plate heat exchanger, a spiral heat exchanger or a tube heat exchanger.

A unique feature of the invention is that the same coolant is used in the direct contact condenser and in the indirect heat exchanger, to extract both the sensible and the latent heat content of the exhaust gas. A further advantage consists in that the direct contact condenser may be used as a flue gas scrubber at the same time.

The final result is that it is possible to use the maximum enthalpy, that is to say the maximum possible energy at the highest possible temperature level of a stream of damp exhaust gas.

The method is preferably carried out in such manner that in the first heat exchanger heated condensate is cooled to a temperature lower than the water dew point of the exhaust gas and then introduced, particularly sprayed, into the direct contact condenser. This enables the coolant to be transported in a circuit. The coolant emerging from the indirect heat exchanger, particularly water, is preferably at a temperature from 70 to 95 °C. The heat content of the coolant may be used in a wide variety of ways. However, due to the relatively low temperature level of the coolant it cannot be used to generate electricity straight away without certain further steps. One preferred refinement therefore provides that the heated condensate is cooled in a second heat exchanger, in which a working fluid from a thermodynamic cycle is evaporated. The thermodynamic cycle is preferably designed as a gas turbine process, so that the thermal energy content of the coolant can easily be converted into mechanical energy, and then successfully into electrical energy. In order to address the low temperature level of the coolant effectively, it is particularly preferred to design the thermodynamic cycle as an Organic Rankine Cycle. The particularity of this thermodynamic cycle is that it uses a working fluid other than steam. The Organic Rankine Cycle (ORC) method is used most often when the available temperature gradient between the heat source and the heat sink is too small to allow the operation of a steam-driven turbine. Possible working media are for example ammonia, R12, HFC-245fa, HFC-245ca, R11 or HFC-236fa, or mixtures thereof.

As was indicated previously, the method according to the invention is particularly suitable for use in recovering energy from the exhaust gas generated in a raw meal mill of a cement manufacturing plant or from the exhaust air from a slag drying unit of a cement manufacturing plant.

According to another aspect, the invention relates to a device for recovering energy from damp exhaust gases, comprising an indirect, first heat exchanger, into which exhaust gas may be introduced via a feed line and from which the cooled exhaust gas may be removed via an extraction line, and a direct contact condenser, to which the cooled exhaust gas may be fed from the first heat exchanger and which comprises a spraying apparatus for spraying coolant and a condensate line for removing the condensate that forms, wherein the condensate may be fed to the first heat exchanger via the condensate line as a coolant for cooling the exhaust gas.

It is preferably provided that the return line is designed to return the condensate from the first heat exchanger to the spraying apparatus of the direct contact condenser. In particular, the return line may pass through a second heat exchanger, wherein the second heat exchanger is provided for cooling the condensate that has been heated in the first heat exchanger down to a temperature that is lower than the water dew point of the exhaust gas.

It is preferably further provided that in order to perform the thermodynamic cycle a system is provided that comprises the second heat exchanger for evaporating a working fluid of the thermodynamic cycle.

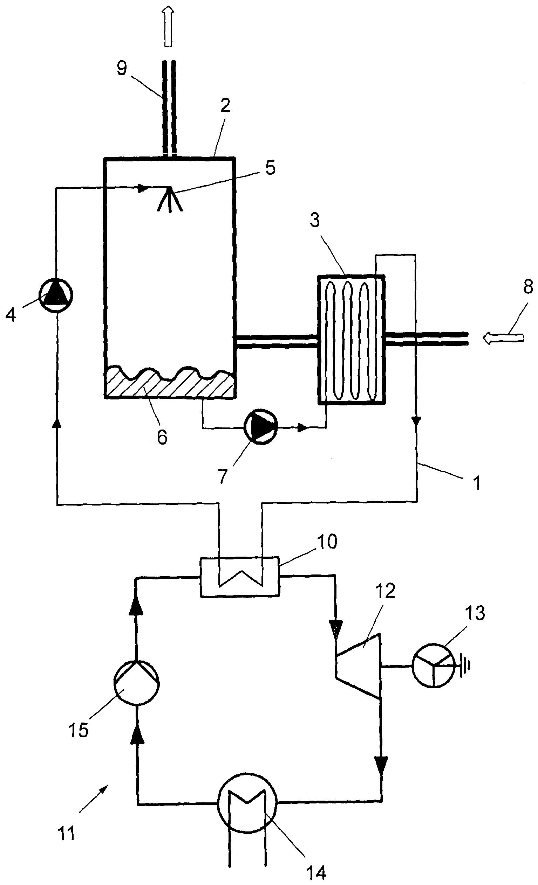

In the following, the invention will be explained in greater detail with reference to an embodiment thereof, which is represented schematically in the drawing. In the drawing, reference numeral 1 designates a water circuit as the coolant circuit for direct contact condenser 2 and indirect heat exchanger 3. The coolant water in the cooling circuit is fed to direct contact condenser 2 by means of a pump 4 and is sprayed inside direct contact condenser 2 by means of a spraying apparatus 5. The condensate 6 that collects on the bottom of direct contact condenser 2 is forwarded by a pump 7 as the coolant to indirect heat exchanger 3, which is preferably designed as a tube heat exchanger. The damp exhaust gas is introduced in the direction indicated by arrow 8 at a temperature between 90 and 130 °C, and first flows through indirect heat exchanger 3, in which the temperature in countercurrent flow to the cooling water is heated to a temperature of 70 °C, for example, but at all events above the water dew point of the exhaust gas, thereby warming the cooling water. The warmed exhaust gas is then forwarded to direct contact condenser 2 and passes through the condenser from the bottom upwards, exiting direct contact condenser 2 through discharge line 9. In direct contact condenser 2, the warmed exhaust gas comes into contact with the sprayed cooling water, and the water vapour contained in the exhaust gas condenses as it heats the cooling water. Optionally, sulphur, chlorine, dust or other solids may also be separated from the exhaust gas in direct contact condenser 2.

Coolant circuit 1 further comprises a heat exchanger 10, which is integrated in a thermodynamic cycle 11. In this context, heat exchanger 10 serves to evaporate the working fluid contained in thermodynamic cycle 11, wherein a quantity of heat is extracted from the cooling water to such a degree that when the cooling water is forwarded to direct contact condenser 2 it is at a temperature below the dew point of the exhaust gas.

Thermodynamic cycle 11 is configured for example as an Organic Rankine Cycle (ORC), wherein for example HFC-245fa is selected as the working fluid. The working fluid is evaporated in heat exchanger 10 and allowed to expand in steam turbine 12, wherein the mechanical energy generated thereby may be converted into electrical energy in an electric generator 13. The condenser in thermodynamic cycle 11 is designated by reference numeral 14. The working fluid that is liquefied in condenser 14 is subsequently compressed in compressor 15.

## Claims

1. Method for recovering energy from damp exhaust gases, in which exhaust gas having a temperature of 90-130 °C and a water dew point of 50-75 °C is first cooled to a temperature above the dew point in an indirect, first heat exchanger (3), and the cooled exhaust gas is then passed through a direct contact condenser (2), wherein the condensate (6) that forms in the direct contact condenser (2) is collected and heated in the first heat exchanger (3) by the exchange of heat with the exhaust gas.

2. The method according to claim 1, **characterized in that** the condensate (6) heated in the first heat exchanger (3) is cooled to a temperature that is lower than the water dew point of the exhaust gas and then introduced into the direct contact condenser (2) as the coolant, particular by spraying.

3. The method according to claim 2, **characterized in that** the heated condensate (6) is cooled in a second heat exchanger (10), in which a working fluid from a thermodynamic cycle (11) is evaporated.

4. The method according to claim 3, **characterized in that** the thermodynamic cycle (11) is designed as a gas turbine process.

5. The method according to claim 3, **characterized in that** the thermodynamic cycle (11) is designed as an Organic Rankine Cycle.

6. The method according to any of claims 1 to 5, **characterized in that** exhaust gas from a cement manufacturing plant is used as the damp exhaust gas.

7. The method according to any of claims 1 to 6, **characterized in that** exhaust gas from a raw meal mill in a cement manufacturing plant is used as the damp exhaust gas.

8. The method according to any of claims 1 to 6, **characterized in that** exhaust air from a slag drying unit in a cement manufacturing plant is used as the damp exhaust gas.

9. Device for recovering energy from damp exhaust gases, particularly for carrying out the method according to any of claims 1 to 8, comprising an indirect, first heat exchanger (3), into which exhaust gas may be introduced via a feed line and from which the cooled exhaust gas may be removed via an extraction line (9), and a direct contact condenser (2), to which the cooled exhaust gas may be fed from the first heat exchanger (3) and which comprises a spraying apparatus (5) for spraying coolant and a condensate line for removing the condensate (6) formed thereby, wherein the condensate (6) may be fed to the first heat exchanger (3) via the condensate line as a coolant for cooling the exhaust gas.

10. The device according to claim 9, **characterized in that** a return line is provided for returning the condensate (6) from the first heat exchanger (3) to the spraying apparatus (5) of the direct contact condenser (2).

11. The device according to claim 10, **characterized in that** the return line passes through a second heat exchanger (10), wherein the second heat exchanger (10) is provided to cool the condensate (6) that is heated in the first heat exchanger (3) down to a temperature that is below the water dew point of the exhaust gas.

12. The device according to claim 11, **characterized in that** a system is provided for carrying out a thermodynamic cycle (11), and comprises the second heat exchanger (10) for evaporating a working fluid of the thermodynamic cycle (11).

13. The device according to claim 12, **characterized in that** the thermodynamic cycle (11) is designed as a gas turbine process.

14. The device according to claim 12, **characterized in that** the thermodynamic cycle (11) is designed as an Organic Rankine Cycle.

## Patentansprüche

1. Verfahren zur Rückgewinnung von Energie aus feuchten Abgasen, bei dem Abgas mit einer Temperatur von 90-130°C und einem Wassertaupunkt von 50-75°C zuerst in einem indirekten, ersten Wärmetauscher (3) auf eine über dem Taupunkt liegende Temperatur abgekühlt und das abgekühlte Abgas danach durch einen Direktkontaktkondensator (2) geleitet wird, wobei das im Direktkontaktkondensator (2) entstehende Kondensat (6) gesammelt und im ersten Wärmetauscher (3) durch Wärmeaustausch mit dem Abgas erwärmt wird.

2. Verfahren nach Anspruch 1, **dadurch gekennzeichnet, dass** das im ersten Wärmetauscher (3) erwärmte Kondensat (6) auf eine unter dem Wassertaupunkt des Abgases liegende Temperatur gekühlt und danach dem Direktkontaktkondensator (2) als Kühlmedium zugeführt, insbesondere in diesen eingesprüht wird.

3. Verfahren nach Anspruch 2, **dadurch gekennzeichnet, dass** die Kühlung des erwärmten Kondensats (6) in einem zweiten Wärmetauscher (10) erfolgt, in dem ein Arbeitsmedium eines thermodynamischen Kreisprozesses (11) verdampft wird.

4. Verfahren nach Anspruch 3, **dadurch gekennzeichnet, dass** der thermodynamische Kreisprozess (11) als Gasturbinenprozess ausgebildet ist.

5. Verfahren nach Anspruch 3, **dadurch gekennzeichnet, dass** der thermodynamische Kreisprozess (11) als Organic Rankine Cycle ausgebildet ist.

6. Verfahren nach einem der Ansprüche 1 bis 5, **dadurch gekennzeichnet, dass** Abgas einer Zementherstellungsanlage als feuchtes Abgas eingesetzt wird.

7. Verfahren nach einem der Ansprüche 1 bis 6, **dadurch gekennzeichnet, dass** Abgas aus einer Rohmehlmühle einer Zementherstellungsanlage als feuchtes Abgas eingesetzt wird.

8. Verfahren nach einem der Ansprüche 1 bis 6, **dadurch gekennzeichnet, dass** Abluft aus einem Schlackentrocknungsaggregat einer Zementherstellungsanlage als feuchtes Abgas eingesetzt wird.

9. Vorrichtung zur Rückgewinnung von Energie aus feuchten Abgasen, insbesondere zur Durchführung des Verfahrens nach einem der Ansprüche 1 bis 8, umfassend einen indirekten, ersten Wärmetauscher (3), dem Abgas über eine Zuleitung zuführbar und von dem gekühltes Abgas über eine Ableitung (9) abführbar ist, und einen Direktkontaktkondensator (2), dem das gekühlte Abgas aus dem ersten Wärmetauscher (3) zuführbar ist und der eine Sprüheinrichtung (5) zum Versprühen von Kühlmedium und eine Kondensatleitung zum Abführen des entstehenden Kondensats (6) aufweist, wobei das Kondensat (6) dem ersten Wärmetauscher (3) über die Kondensatleitung als Kühlmedium zum Abkühlen des Abgases zuführbar ist.

10. Vorrichtung nach Anspruch 9, **dadurch gekennzeichnet, dass** eine Rückführungsleitung zum Rückführen des Kondensats (6) aus dem ersten Wärmetauscher (3) zur Sprüheinrichtung (5) des Direktkontaktkondensators (2) vorgesehen ist.

11. Vorrichtung nach Anspruch 10, **dadurch gekennzeichnet, dass** die Rückführungsleitung durch einen zweiten Wärmetauscher (10) führt, wobei der zweite Wärmetauscher (10) zum Kühlen des im ersten Wärmetauscher (3) erwärmten Kondensats (6) auf eine unter dem Wassertaupunkt des Abgases liegende Temperatur vorgesehen ist.

12. Vorrichtung nach Anspruch 11, **dadurch gekennzeichnet, dass** eine Anlage zur Durchführung eines thermodynamischen Kreisprozesses (11) vorgesehen ist, die den zweiten Wärmetauscher (10) zum Verdampfen eines Arbeitsmediums des thermodynamischen Kreisprozesses (11) umfasst.

13. Vorrichtung nach Anspruch 12, **dadurch gekennzeichnet, dass** der thermodynamische Kreisprozess (11) als Gasturbinenprozess ausgebildet ist.

14. Vorrichtung nach Anspruch 12, **dadurch gekennzeichnet, dass** der thermodynamische Kreisprozess (11) als Organic Rankine Cycle ausgebildet ist.

## Revendications

1. Procédé permettant de récupérer de l'énergie provenant de gaz d'échappement humides, dans lequel un gaz d'échappement ayant une température de 90-130 °C et un point de rosée de l'eau de 50-75 °C est tout d'abord refroidi à une température au-dessus du point de rosée dans un premier échangeur de chaleur indirect (3), et le gaz d'échappement refroidi est ensuite passé à travers un condenseur à contact direct (2), dans lequel le condensat (6) qui se forme dans le condenseur à contact direct (2) est recueilli et chauffé dans le premier échangeur de chaleur (9) par l'échange de chaleur avec le gaz d'échappement.

2. Procédé selon la revendication 1, **caractérisé en ce que** le condensat (6) chauffé dans le premier échangeur de chaleur (3) est refroidi à une température qui est inférieure au point de rosée de l'eau du gaz d'échappement et puis introduit dans le condenseur à contact direct (2) en tant que liquide de refroidissement, en particulier par pulvérisation.

3. Procédé selon la revendication 2, **caractérisé en ce que** le condensat chauffé (6) est refroidi dans un second échangeur de chaleur (10), dans lequel un fluide de travail provenant d'un cycle thermodynamique (11) est évaporé.

4. Procédé selon la revendication 3, **caractérisé en ce que** le cycle thermodynamique (11) est conçu comme un processus de turbine à gaz.

5. Procédé selon la revendication 3, **caractérisé en ce que** le cycle thermodynamique (11) est conçu comme un cycle de Rankine organique.

6. Procédé selon l'une quelconque des revendications 1 à 5, **caractérisé en ce que** le gaz d'échappement provenant d'une usine de ciment est utilisé comme le gaz d'échappement humide.

7. Procédé selon l'une quelconque des revendications 1 à 6, **caractérisé en ce que** le gaz d'échappement provenant d'un broyeur d'agrégat brut dans une usine de ciment est utilisé comme le gaz d'échappement humide.

8. Procédé selon l'une quelconque des revendications 1 à 6, **caractérisé en ce que** l'air d'échappement d'une unité de séchage de laitier dans une usine de ciment est utilisé comme le gaz d'échappement humide.

9. Dispositif permettant de récupérer de l'énergie de gaz d'échappement humides, en particulier d'exécuter le procédé selon l'une quelconque des revendications 1 à 8, comprenant un premier échangeur de chaleur indirect (3), dans lequel du gaz d'échappement peut être introduit via une conduite d'alimentation et duquel le gaz d'échappement refroidi peut être retiré via une conduite d'extraction (9), et un condensateur à contact direct (2), auquel le gaz d'échappement refroidi peut être fourni à partir du premier échangeur de chaleur (3) et qui comprend un appareil de pulvérisation (5) pour pulvériser un liquide de refroidissement et une conduite de condensat pour retirer le condensat (6) ainsi formé, dans lequel le condensat (6) peut être fourni au premier échangeur de chaleur (3) via la conduite de condensat comme un liquide de refroidissement pour refroidir le gaz d'échappement.

10. Dispositif selon la revendication 9, **caractérisé en ce qu'**une conduite de retour est prévue pour retourner le condensat (6) du premier échangeur de chaleur (3) vers l'appareil de pulvérisation (5) du condenseur à contact direct (2).

11. Dispositif selon la revendication 10, **caractérisé en ce que** la conduite de retour passe à travers un second échangeur de chaleur (10), dans lequel le second échangeur de chaleur (10) est prévu pour refroidir le condensat (6) qui est chauffé dans le premier échangeur de chaleur (3) jusqu'à une température qui est inférieure au point de rosée de l'eau du gaz d'échappement.

12. Dispositif selon la revendication 11, **caractérisé en ce qu'**un système est prévu pour exécuter un cycle thermodynamique (11), et comprend le second échangeur de chaleur (10) pour évaporer un fluide de travail du cycle thermodynamique (11).

13. Dispositif selon la revendication 12, **caractérisé en ce que** le cycle thermodynamique (11) est conçu comme un processus de turbine à gaz.

14. Dispositif selon la revendication 12, **caractérisé en ce que** le cycle thermodynamique (11) est conçu comme un cycle de Rankine organique.
